# EUROPEAN PATENT SPECIFICATION

(11) **EP 4 099 204 B1**
(45) Date of publication and mention of the grant of the patent: **08.04.2026**
(21) Application number: 22162660.9
(22) Date of filing: 17.03.2022
(51) Int. Cl.: G06N 3/04, G06N 3/0499, G06N 3/08, G06F 21/62, G06N 3/09

(54) **PROBABILISTIC CLASSIFIER MAXIMUM CERTAINTY FACTOR CORRECTION**
MAXIMALEWAHRSCHEINLICHKEITSAUSGABE KORREKTUR EINES PROBABILISTISCHEN KLASSIFIZIERUNGSSYSTEMS
CORRECTION DE LA PROBABILITE DE CLASSIFICATION MAXIMUM POUR UN CLASSIFICATEUR PROBABILISTE

(30) Priority: 03.06.2021 JP 2021093601
(43) Date of publication of application: 07.12.2022
(73) Proprietor: FUJITSU LIMITED, Kawasaki-shi, Kanagawa 211-8588 (JP)
(72) Inventor: MAEDA, Wakana, Kawasaki-shi, Kanagawa, 211-8588 (JP)
(74) Representative: Hoffmann Eitle

(56) References cited:
- WO-A1-2021/052201
- LEE TAESUNG ET AL: "Defending Against Neural Network Model Stealing Attacks Using Deceptive Perturbations", 1 May 2019 (2019-05-01), pages 43 - 49, XP055907561, ISBN: 978-1-7281-3508-3, Retrieved from the Internet <URL:https://csdl-downloads.ieeecomputer.org/proceedings/spw/2019/3508/00/350800a043.pdf?Expires=1648718370&Policy=eyJTdGF0ZW1lbnQiOlt7IlJlc291cmNlIjoiaHR0cHM6Ly9jc2RsLWRvd25sb2Fkcy5pZWVlY29tcHV0ZXIub3JnL3Byb2NlZWRpbmdzL3Nwdy8yMDE5LzM1MDgvMDAvMzUwODAwYTA0My5wZGYiLCJDb25kaXRpb24iOnsiRGF0ZUxlc3NUaGFuIjp7Ik> [retrieved on 20220830], DOI: 10.1109/SPW.2019.00020

## Description

### FIELD

The embodiments discussed herein are related to an information processing program, an information processing method, and an information processing apparatus.

### BACKGROUND

With an information communication technology, it is possible to provide various data analysis services via a network, by using a trained model generated by machine learning. For example, a server for providing a service may predicts a class to which data provided by a user belongs, by using a model for performing class classification.

For a service using a trained model, various technologies are proposed. For example, there is proposed an information processing apparatus that calculates a certainty factor of input data, determines any of confirmation, user presentation, and non-processing based on a plurality of threshold values, removes a contradiction even in a case where two or more confirmations are not permitted, and reduces a cost due to a manual check. A service construction apparatus capable of supporting rapid development of a service using an outcome of machine learning is also proposed.

Japanese Laid-open Patent Publication No. 2004-348507 and Japanese Laid-open Patent Publication No. 2018-97671 are disclosed as related art.
WO 2021/052201 A1 describes a data theft prevention method. The method comprises: a data processing device obtains target data; inputs the target data into a recognition model to perform recognition processing to obtain a first label, the first label being the label to which the target data belongs, the recognition processing comprising that the recognition model performs feature extraction processing on the target data to obtain a first feature vector, and that the recognition model performs prediction according to the first feature vector to obtain a first label; and if it is determined that a second feature vector exists, outputs a target label, the second feature vector being a feature vector having a distance from the first feature vector less than a first threshold, a second label predicted by the recognition model being different from the first label, and the target tag being a tag obtained by performing perturbation on the first tag, such that the leakage of parameters of the recognition model can be prevented.
Lee Taesung et al."Defending Against Neural Network Model Stealing Attacks Using Deceptive Perturbations", 2019 IEEE Security and Privacy Workshop, describes defending against neural network model stealing attacks using deceptive perturbations.

### SUMMARY

### [TECHNICAL PROBLEMS]

Providing a service using a model to an unspecified large number of users may cause attacks from malicious users. As one of attacks on a service using a trained model, there is a membership inference attack. The membership inference attack is an attack of inferring whether or not data of a specific person
is included in training data to be used to construct a model. When the membership inference attack is permitted, personal information to be concealed may be leaked.

For example, as a trained model used in the medical field, there is a dose prediction model. For generation of the dose prediction model, data on dosing results for a large number of patients having a specific disease is used as training data. By the membership inference attack, when an attacker grasps that data of a specific patient is included in the training data, personal information indicating that the patient has the specific disease is also grasped. A class classification service in related art does not have sufficient resistance to such a membership inference attack.

According to one aspect, an object of the present disclosure is to enhance resistance to a membership inference attack.

### [SOLUTION TO PROBLEM]

The above problem is solved by the subject matter of the independent claims. Examples and technical descriptions of apparatuses, products and/or methods in the description and/or drawings which are not covered by the claims are presented not as embodiments of the invention but as background art or examples useful for understanding the invention. According to an aspect of examples, an information processing program that causes at least one computer to execute a process, the process includes acquiring each of a plurality of certainty factors representing a possibility that classification target data belongs to a class of a plurality of classes for each of the plurality of classes by using a trained model; determining whether a maximum certainty factor having a maximum value among the plurality of certainty factors of the plurality of classes is within a certain value range; correcting a value of the maximum certainty factor to a value within the certain value range when the maximum certainty factor is not within the certain value range; and outputting the plurality of certainty factors after the correcting as a result of class classification for the classification target data.

### [ADVANTAGEOUS EFFECTS OF INVENTION]

According to one aspect, resistance to a membership inference attack is enhanced.

### BRIEF DESCRIPTION OF DRAWINGS

FIG. 1 is a diagram illustrating an example of an information processing method of enhancing resistance to a membership inference attack;
FIG. 2 is a diagram illustrating an example of a system configuration for providing a class classification service;
FIG. 3 is a diagram illustrating an example of hardware of a server;
FIG. 4 is a diagram illustrating a use status of the class classification service;
FIG. 5 is a diagram illustrating an example of a membership inference attack;
FIG. 6 is a diagram illustrating an example of a problem that occurs in a case where a descending order of certainty factors is returned;
FIG. 7 is a block diagram illustrating an example of a class classification function of the server;
FIG. 8 is a diagram illustrating an example of a certainty factor correction process;
FIG. 9 is a flowchart illustrating an example of a procedure of a certainty factor vector generation process with improved resistance to the membership inference attack;
FIG. 10 is a diagram illustrating a failure example of the membership inference attack; and
FIG. 11 is a diagram illustrating an example of certainty factor correction in which correction of decreasing the maximum certainty factor is performed.

### DESCRIPTION OF EMBODIMENTS.

The invention is defined by the attached independent claims. The dependent claims give example embodiments. Hereinafter, the present embodiments will be described with reference to the drawings. Each of the embodiments may be implemented by combining a plurality of embodiments within a range without contradiction.

### [First Embodiment]

First, a first embodiment will be described. The first embodiment is an information processing method with enhanced resistance to a membership inference attack.

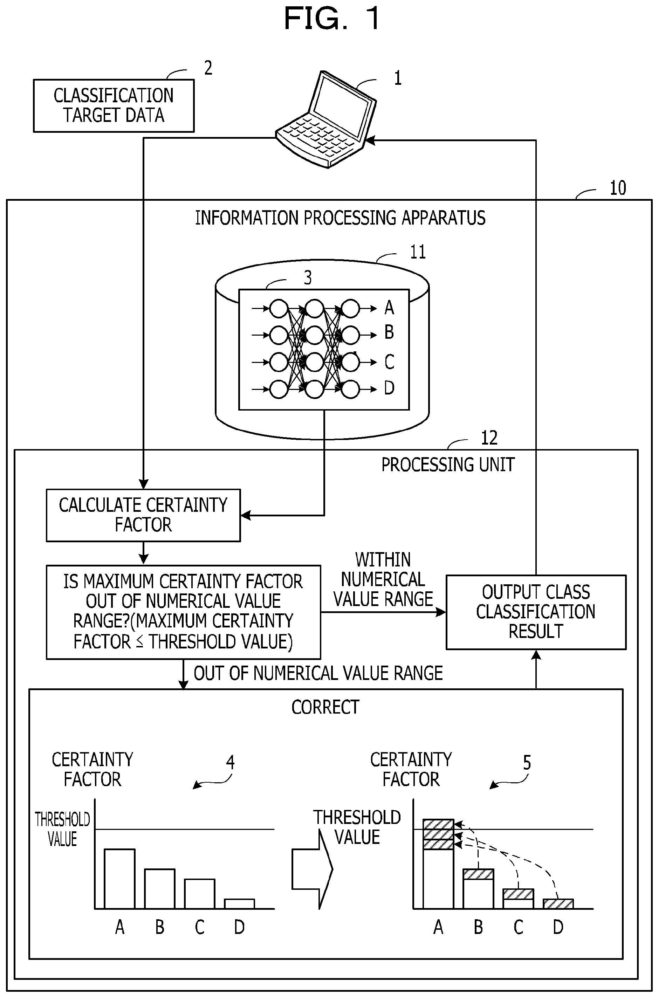

FIG. 1 is a diagram illustrating an example of an information processing method with enhanced resistance to a membership inference attack. FIG. 1 illustrates an information processing apparatus 10 that implements an information processing method according to the first embodiment. For example, by executing a predetermined information processing program, the information processing apparatus 10 may execute the information processing method in which the resistance to the membership inference attack is enhanced.

The information processing apparatus 10 performs a class classification process on classification target data 2 transmitted from a terminal 1, for example, and outputs a classification result indicating a class to which the classification target data 2 belongs. The information processing apparatus 10 includes a storage unit 11 and a processing unit 12, for this purpose. The storage unit 11 is, for example, a storage device or a memory included in the information processing apparatus 10. The processing unit 12 is, for example, a processor or an arithmetic circuit included in the information processing apparatus 10.

The storage unit 11 stores a trained model 3 for class classification. For example, the model 3 is a neural network.

After receiving the classification target data 2, the processing unit 12 uses the model 3 to calculate, for each of a plurality of classes, a certainty factor representing a possibility that the classification target data 2 belongs to the class. For example, in a case where the classification target data 2 is represented by a feature amount vector, the processing unit 12 calculates an output of the model 3, by using each element included in the feature amount vector as an input to the model 3. The output of the model 3 is a certainty factor for each of the plurality of classes. In a case where the classification target data 2 is data before being processed into a feature amount vector, the processing unit 12 may generate the feature amount vector based on the classification target data 2.

After calculating the certainty factors, the processing unit 12 determines whether or not a maximum certainty factor having a maximum value among the respective certainty factors of the plurality of classes is within a predetermined numerical value range. For example, the predetermined numerical value range is a range of a value greater than a preset threshold value. In a case where an upper limit of the certainty factor is "1", a range of a value between the threshold value and 1 is the predetermined numerical value range. A range of a value equal to or less than the preset threshold value may be set as the predetermined numerical value range.

In a case where the maximum certainty factor is not included in the predetermined numerical value range, the processing unit 12 corrects the maximum certainty factor to a value within the numerical value range. For example, in a case where the predetermined numerical value range is a range of a value greater than the threshold value, the processing unit 12 corrects the maximum certainty factor equal to or less than the threshold value to a value greater than the threshold value. At this time, the processing unit 12 decreases a value of the certainty factor other than the maximum certainty factor (decrease target certainty factor) such that a sum of the decrease amounts is equal to the increase amount of the maximum certainty factor while maintaining an order in a case where the respective certainty factors of the plurality of classes are arranged with sizes of values. For example, the processing unit 12 decreases the decrease target certainty factor other than the maximum certainty factor in ascending order from the minimum certainty factor having the smallest value until the sum of the decrease amounts is equal to the increase amount of the maximum certainty factor.

A graph 4 in FIG. 1 illustrates a certainty factor of each class before correction by a height of a bar graph. According to the graph 4, a certainty factor of a class "A" is the maximum certainty factor. A value of the maximum certainty factor before correction is equal to or less than a threshold value. Accordingly, the processing unit 12 corrects the certainty factor. A correction result is illustrated in a graph 5. In the graph 5, each 1/3 of an increase amount of the class "A" is subtracted from each certainty factor of other classes "B", "C", and "D". Since decrease amounts of the certainty factors of the classes "B", "C", and "D" are equal to each other, an order when the classes "B", "C", and "D" are arranged with the certainty factors is maintained.

In a case of correcting the maximum certainty factor, the processing unit 12 outputs the corrected certainty factor of each of the plurality of classes, as a result of class classification on the classification target data 2. In a case where the maximum certainty factor of the certainty factors calculated by using the model 3 is within the predetermined numerical value range, the processing unit 12 outputs the calculation result without correction, as the result of class classification. For example, the processing unit 12 transmits the result of class classification to the terminal 1.

As described above, in a case where the maximum certainty factor is out of the predetermined numerical value range, by performing correction such that the maximum certainty factor is within the numerical value range, the maximum certainty factor output as the result of class classification is regularly within the numerical value range. For this reason, even when an attacker performs a membership inference attack by using information on whether or not the maximum certainty factor when class classification of the classification target data 2 is performed is within a certain numerical value range, it is difficult to correctly determine whether or not the classification target data 2 is included in training data. For example, resistance to the membership inference attack is improved.

Even after the correction, the order of the respective classes based on the certainty factors is maintained. For example, by decreasing the value by a predetermined amount in order from the certainty factor having the small value, it is reliably suppressed that the order of classes is changed depending on the certainty factor of a correction degree. Accordingly, it is possible to suppress deterioration of information by correcting the certainty factor to the minimum. As a result, in a case where the result of class classification is used for the other information process, deterioration in calculation accuracy of the other information process is suppressed.

The predetermined numerical value range may be set within a range of a value equal to or less than the threshold value. In this case, the processing unit 12 corrects the maximum certainty factor exceeding the threshold value to a value equal to or less than the threshold value. For example, in a case where the maximum certainty factor is not included in the numerical value range, the processing unit 12 increases a value of the certainty factor other than the maximum certainty factor (increase target certainty factor) such that a sum of the increase amounts is equal to the decrease amount of the maximum certainty factor while maintaining an order in a case where the respective certainty factors of the plurality of classes are arranged with the sizes of the values. Accordingly, the maximum certainty factor indicated in the result of class classification is regularly equal to or less than the threshold value, and the membership inference attack becomes difficult.

For example, the processing unit 12 determines a value within the numerical value range by using a random number, and corrects the maximum certainty factor to the determined value. Accordingly, the value of the maximum certainty factor after the correction becomes a random value, and it is possible to suppress the attacker from grasping the presence or absence of the correction based on the maximum certainty factor after the correction.

### [Second Embodiment]

Next, a second embodiment will be described. According to the second embodiment, in a system that provides a class classification service using a model that is trained by machine learning, resistance to a membership inference attack is improved.

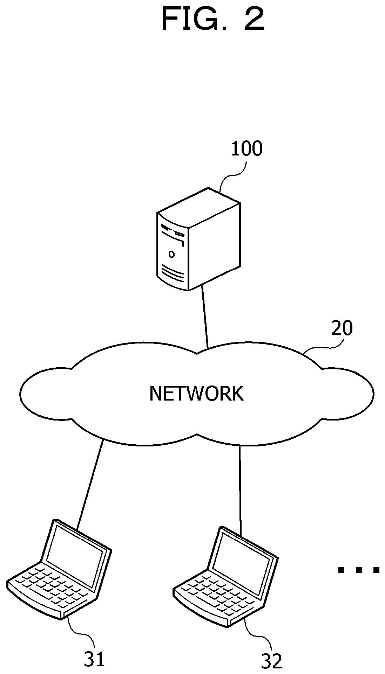

FIG. 2 is a diagram illustrating an example of a system configuration for providing a class classification service. A plurality of terminals 31, 32, ... are coupled to a server 100 via a network 20. The server 100 is a computer that has a trained model for class classification, and provides a class classification service using the model. Each of the plurality of terminals 31, 32, ... is a computer used by a user who is provided with the class classification service.

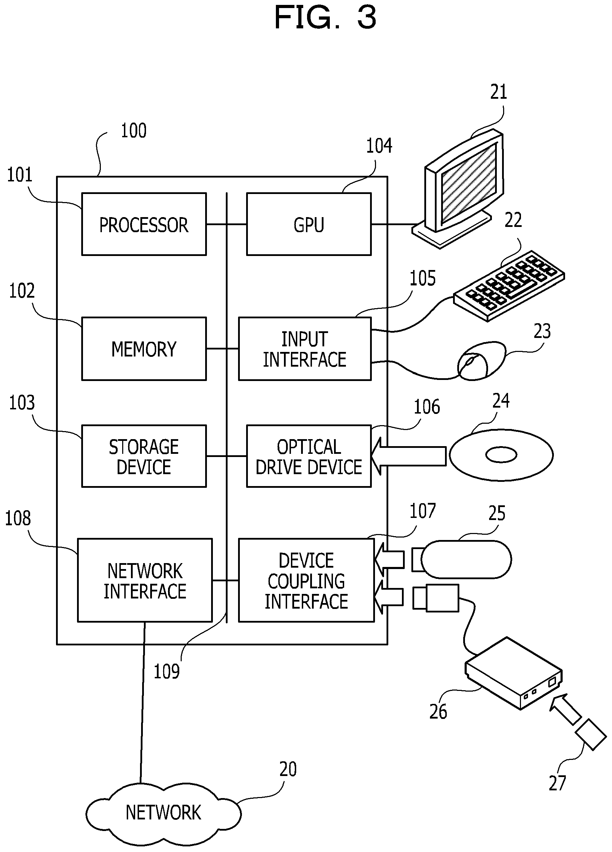

FIG. 3 is a diagram illustrating an example of hardware of the server 100. An entirety of the server 100 is controlled by a processor 101. A memory 102 and a plurality of peripheral devices are coupled to the processor 101 via a bus 109. The processor 101 may be a multiprocessor. The processor 101 is, for example, a central processing unit (CPU), a microprocessor unit (MPU), or a digital signal processor (DSP). At least a part of a function realized by the processor 101 executing a program may be implemented by an electronic circuit such as an application-specific integrated circuit (ASIC), a programmable logic device (PLD), or the like.

The memory 102 is used as a main storage apparatus of the server 100. The memory 102 temporarily stores at least a part of an operating system (OS) program or an application program to be executed by the processor 101. The memory 102 stores various types of data to be used for a process by the processor 101. As the memory 102, for example, a volatile semiconductor storage apparatus such as a random-access memory (RAM) or the like is used.

The peripheral device coupled to the bus 109 includes a storage device 103, a graphics processing unit (GPU) 104, an input interface 105, an optical drive device 106, a device coupling interface 107, and a network interface 108.

The storage device 103 writes and reads data electrically or magnetically to a built-in recording medium. The storage device 103 is used as an auxiliary storage apparatus of a computer. The storage device 103 stores an OS program, an application program, and various types of data. As the storage device 103, for example, a hard disk drive (HDD) or a solid-state drive (SSD) may be used.

The GPU 104 is an arithmetic device that performs image processing, and is also referred to as a graphic controller. A monitor 21 is coupled to the GPU 104. The GPU 104 displays images on a screen of the monitor 21 in accordance with an instruction from the processor 101. As the monitor 21, a display device, a liquid crystal display device, or the like using organic electro luminescence (EL) is used.

A keyboard 22 and a mouse 23 are coupled to the input interface 105. The input interface 105 transmits to the processor 101 signals transmitted from the keyboard 22 and the mouse 23. The mouse 23 is an example of a pointing device, and other pointing devices may be used. An example of the other pointing device includes a touch panel, a tablet, a touch pad, a track ball, or the like.

The optical drive device 106 reads data recorded in an optical disc 24 or writes data to the optical disc 24 by using laser light or the like. The optical disc 24 is a portable recording medium in which data is recorded such that the data is readable through reflection of light. Examples of the optical disc 24 include a Digital Versatile Disc (DVD), a DVD-RAM, a compact disc read-only memory (CD-ROM), a CD-recordable (CD-R), a CD-rewritable (CD-RW), and the like.

The device coupling interface 107 is a communication interface for coupling a peripheral device to the server 100. For example, a memory device 25 and a memory reader and writer 26 may be coupled to the device coupling interface 107. The memory device 25 is a recording medium in which the function of communication with the device coupling interface 107 is provided. The memory reader and writer 26 is a device that writes data to a memory card 27 or reads data from the memory card 27. The memory card 27 is a card-type recording medium.

The network interface 108 is coupled to the network 20. The network interface 108 transmits and receives data to and from another computer or a communication device via the network 20. The network interface 108 is, for example, a wired communication interface that is coupled to a wired communication device such as a switch or a router by a cable. The network interface 108 may be a wireless communication interface that is coupled, by radio waves, to and communicates with a wireless communication device such as a base station or an access point.

With the hardware described above, the server 100 may implement processing functions of the second embodiment. Each of the plurality of terminals 31, 32, ... also has hardware in the same manner as the hardware of the server 100. The information processing apparatus 10 described in the first embodiment also has hardware in the same manner as the hardware of the server 100.

The server 100 implements the processing functions of the second embodiment by executing a program recorded in a computer-readable recording medium, for example. A program in which details of processing to be executed by the server 100 is written may be recorded in various recording media. For example, a program to be executed by the server 100 may be stored in the storage device 103. The processor 101 loads at least a part of the program in the storage device 103 to the memory 102, and executes the program. The program to be executed by the server 100 may also be recorded in a portable-type recording medium such as the optical disc 24, the memory device 25, or the memory card 27. The program stored in the portable-type recording medium may be executed after the program is installed in the storage device 103 under the control of the processor 101, for example. The processor 101 may read the program directly from the portable-type recording medium and execute the program.

The server 100 publishes a trained model constructed by machine learning and permits query access to the model from the terminals 31, 32, ... to provide a class classification service to the users who use the terminals 31, 32, .... At this time, there is a possibility that some of the users become attackers, and perform a membership inference attack.

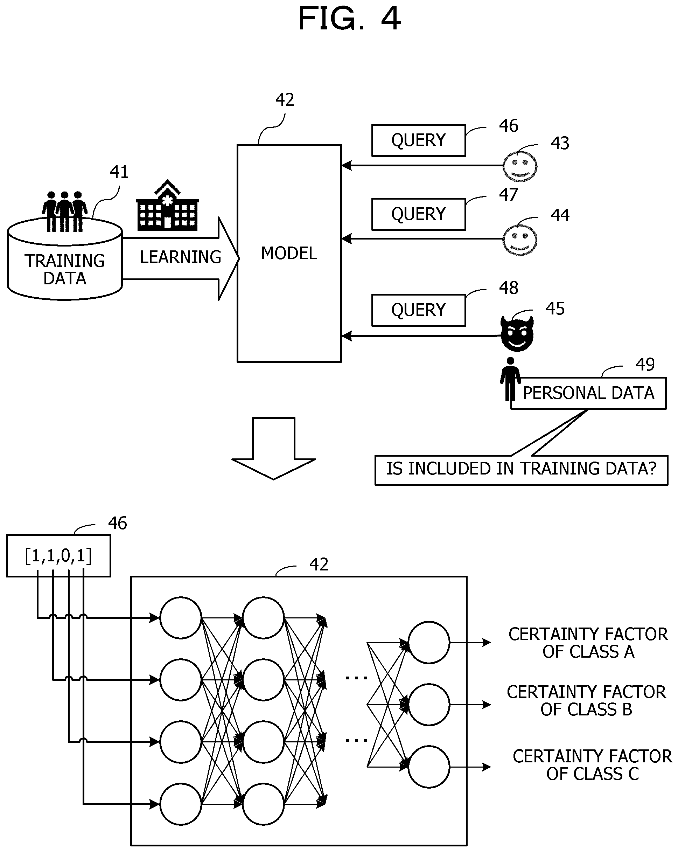

FIG. 4 is a diagram illustrating a use status of a class classification service. By using the technology of machine learning, a model 42 for class classification may be generated by learning using training data 41. For example, the model 42 is represented by a neural network. The training data 41 includes learning data used as an explanatory variable and data (correct answer label) used as an objective variable. In a case of class classification, the correct answer label indicates a class to which learning data belongs.

At a learning phase in machine learning, when learning data is input to the model 42, values such as weight parameters of the model 42 are optimized such that a class predicted by the model 42 coincides with the correct answer label. An output of the model 42 that performs class classification is a probability that the input data belongs to each class. Hereinafter, this probability is referred to as a certainty factor. For example, in a case of the model 42 that performs classification into the class A, the class B, and the class C, the certainty factor of each class is output. A class having the highest certainty factor is a class to which the input data is predicted to belong.

General users 43 to 45 who use the trained model 42 transmit queries 46 to 48 to the server 100 by using the terminals 31, 32, .... The queries 46 to 48 indicate, for example, feature amounts of data which the users 43 to 45 want to classify. The feature amount is indicated by vector data, for example. According to the example illustrated in FIG. 4, the queries 46 to 48 are vector data (feature amount vector) including four elements.

By using the queries 46 to 48 as an input to the model 42, the server 100 predicts a class to which data that is a generation source of the queries 46 to 48 belongs. The users 43 to 45 acquire a certainty factor of each class corresponding to the queries 46 to 48 from the server 100. The users 43 to 45 may use the acquired certainty factor for the other information process.

An attacker may be included in the users 43 to 45 of the server 100. According to the example illustrated in FIG. 4, it is assumed that the user 45 is the attacker. For example, the user 45 performs a membership inference attack. The membership inference attack is an attack of discriminating whether or not personal data 49 acquired by the user 45 is included in the training data 41 used for learning of the model 42.

When the membership inference attack is successful, information indicating whether specific data is included in a confidential data set is leaked to the attacker. For example, in a case where the attacker knows that the personal data 49 of a person F belongs to training data of a warfarin dose prediction model, the fact that the person F has a medical history due to blood clots is leaked to the attacker.

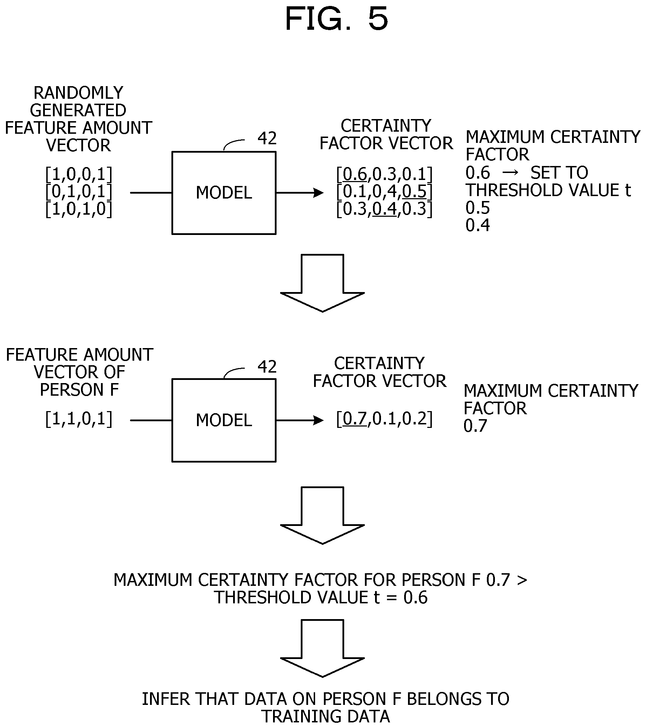

FIG. 5 is a diagram illustrating an example of a membership inference attack. An attacker may transmit a query to a trained model, and acquire a certainty factor as a response value. A purpose of the attacker is to infer whether or not the person F belongs to training data of the trained model. The attacker has data on the person F, as knowledge. An attack procedure of the attacker is as follows.

First, the attacker acquires the maximum certainty factor of data that does not belong to the training data, in order to set a threshold value t for determining whether or not the data on the person F belongs to the training data. For example, the attacker generates a plurality of feature amount vectors having random values, for example. The attacker inputs the randomly generated feature amount vector to the model 42 as a query, and acquires a certainty factor vector for each feature amount vector. The certainty factor vector is vector data including a certainty factor of each class as an element. Hereinafter, a certainty factor having the largest value in the certainty factor vector is set as the maximum certainty factor of the certainty factor vector.

The attacker determines the threshold value t based on the maximum certainty factor for each certainty factor vector. For example, the largest value among a plurality of obtained maximum certainty factors is set as the threshold value t. In the example illustrated in FIG. 5, the threshold value t is "0.6".

Next, the attacker generates a feature amount vector based on the data on the person F. The attacker inputs the feature amount vector of the person F to the model 42 as a query, and obtains a certainty factor vector related to a class to which the data on the person F belongs. In the example illustrated in FIG. 5, the maximum certainty factor of the certainty factor vector of the data on the person F is "0.7".

The attacker compares the maximum certainty factor of the certainty factor vector of the data on the person F with the threshold value t. When the maximum certainty factor is more than the threshold value t, the attacker infers that the data on the person F belongs to the training data. Since the maximum certainty factor of "0.7" is more than the threshold value t of "0.6" in the example of FIG. 5, it is inferred that the data on the person F is included in the training data.

For data that is not included in the training data, this membership inference attack is an attack method using the fact that the maximum certainty factor obtained by class classification using the model 42 tends to be low.

As a simple countermeasure against the membership inference attack, a method is conceivable in which a descending order of certainty factors is returned without returning the certainty factor as a result of class classification. Meanwhile, when this method is adopted, a user may not acquire the certainty factor. In a case where the user executes an information process using a numerical value of a certainty factor, a target process may not be executed when the certainty factor is not acquired.

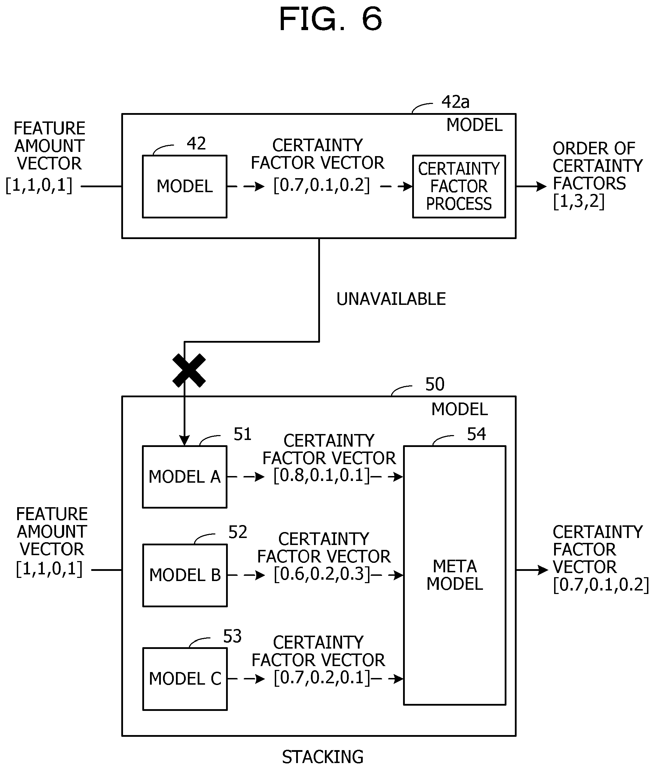

FIG. 6 is a diagram illustrating an example of a problem that occurs in a case where a descending order of certainty factors is returned. For example, one of the machine learning methods is a method called stacking. The stacking is a machine learning method of obtaining a target prediction result by inputting a prediction value of a certain model as a feature amount to another model.

For example, it is assumed that a model 42a published by the server 100 does not output the trained model 42 as it is, but outputs the model 42 after performing a process of replacing certainty factors of a certainty factor vector output from the model 42 with a descending order.

A user wants to use the model 42a included in the server 100, for a part of a model 50 for stacking. The model 50 inputs a feature amount vector to a plurality of models 51 to 53, and inputs a certainty factor vector output from the models 51 to 53 to a meta model 54. An output of the meta model 54 is a certainty factor vector predicted by the entire model 50.

In such a case, when the output of the model 42a provided by the server 100 is not a certainty factor vector but a descending order of certainty factors, the prediction result by the model 42a may not be used for stacking.

As a countermeasure against a membership inference attack, in addition to the method of replacing the certainty factor vector in a descending order, for example, a method of making it difficult for an attacker to calculate an appropriate threshold value by truncating lower digits of each certainty factor of the certainty factor vector is conceivable. Meanwhile, in this method, a change in maximum certainty factor in the certainty factor vector is small, so a defense effect is small. Another conceivable method is to construct a model that satisfies difference privacy (meaning that personal data in a data set is hidden so that the data set may be used for learning) by adding noise in a learning process. Meanwhile, when the noise is added, an order of certainty factors is likely to be changed, and accuracy deteriorates. Although it is also conceivable that a perturbation is added to the calculated certainty factor so that a model assumed to be attacked outputs an incorrect determination, the order of certainty factors is not maintained and the accuracy deteriorates in this method.

As described above, it is desirable to defend the membership inference attack after guaranteeing that the order of certainty factors is maintained and the certainty factor is output as a result of class classification. In a case where the maximum certainty factor of a certainty factor vector obtained by class classification is equal to or less than a predetermined threshold value, the server 100 according to the second embodiment performs correction such that the maximum certainty factor has a value greater than the threshold value without changing an order of each class when the classes are arranged in a descending order of the certainty factor. Accordingly, the attacker may not set an appropriate threshold value for the membership inference attack using the maximum certainty factor, and a defense effect against the membership inference attack may be obtained.

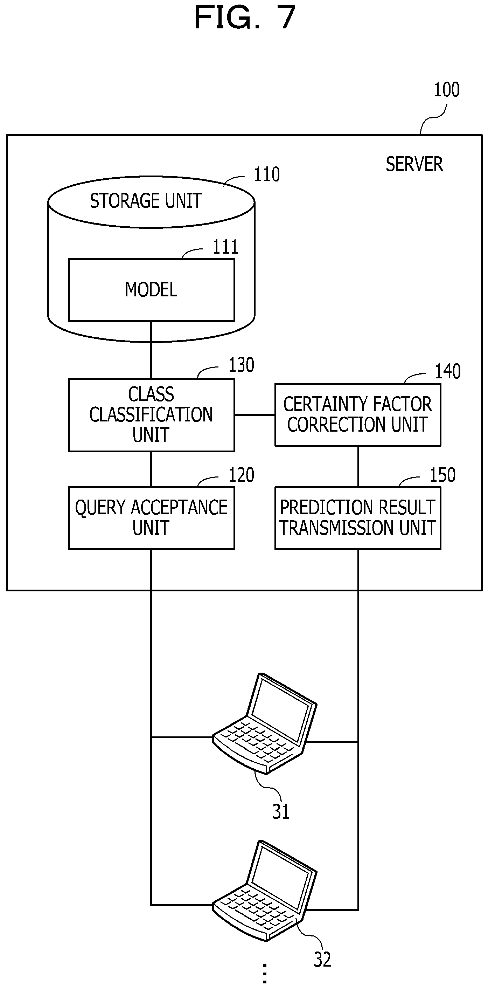

FIG. 7 is a block diagram illustrating an example of a class classification function of the server 100. The server 100 includes a storage unit 110, a query acceptance unit 120, a class classification unit 130, a certainty factor correction unit 140, and a prediction result transmission unit 150.

The storage unit 110 stores a trained model 111. For example, the model 111 is a neural network in the same manner as the model 42 illustrated in FIG. 4. The storage unit 110 is implemented by the memory 102 or the storage device 103.

The query acceptance unit 120 accepts a query from the terminals 31, 32, .... After receiving the query, the query acceptance unit 120 transmits the received query to the class classification unit 130.

When receiving the query from the query acceptance unit 120, the class classification unit 130 performs a class classification process on a feature amount vector indicated in the query. For example, the class classification unit 130 acquires the model 111 from the storage unit 110. By using the acquired query as an input to the model 111, the class classification unit 130 performs an operation in accordance with the model 111 to calculate a certainty factor vector. The class classification unit 130 transmits the calculated certainty factor vector to the certainty factor correction unit 140.

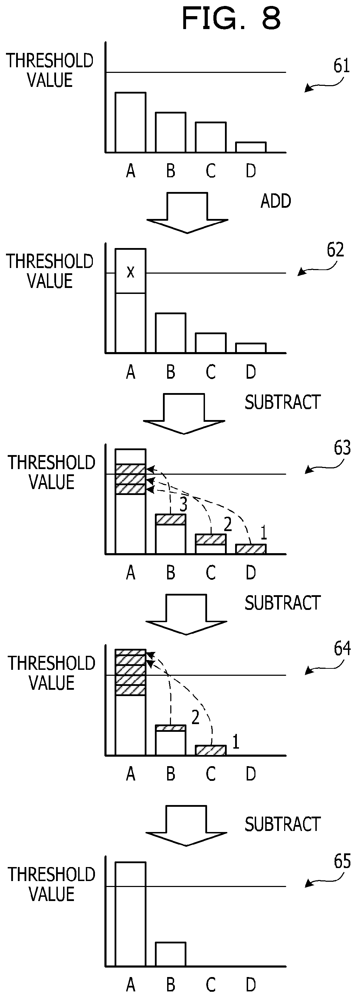

The certainty factor correction unit 140 corrects a certainty factor such that the maximum certainty factor of the certainty factor vector obtained as a result of class classification is equal to or more than a predetermined threshold value. Details of a method of correcting the certainty factor will be described below (refer to FIG. 8 and the like). The certainty factor correction unit 140 transmits a certainty factor vector having the corrected certainty factor to the prediction result transmission unit 150.

As a result of class classification, the prediction result transmission unit 150 transmits the certainty factor vector having the corrected certainty factor to a terminal that is a transmission source of the query.

A line coupling the respective elements illustrated in FIG. 7 represents a part of a communication path, and other communication paths other than the communication path may also be set. A function of each element illustrated in FIG. 7 may be implemented by causing, for example, a computer to execute program modules corresponding to the element.

Next, a certainty factor correction process will be described in detail.

FIG. 8 is a diagram illustrating an example of the certainty factor correction process. When the maximum certainty factor is less than a threshold value, the certainty factor correction unit 140 adds a value such that the maximum certainty factor is equal to or more than the threshold value. The value to be added at this time is denoted by x.

Next, the certainty factor correction unit 140 subtracts a numerical value from each certainty factor other than the maximum certainty factor until a sum becomes x such that an order of the certainty factors is not changed. For example, the certainty factor correction unit 140 sets the minimum certainty factor as a target of the subtraction process in ascending order, and repeats the process until the sum of the subtraction values becomes x.

FIG. 8 illustrates graphs 61 to 65 indicating a certainty factor of each class in a case where data is classified into four classes. The graph 61 illustrates certainty factors calculated by the class classification unit 130. The class "A", the class "B", the class "C", and the class "D" are set in a descending order of the certainty factors. The class "A" has the highest certainty factor.

A threshold value of the certainty factors is preset in the certainty factor correction unit 140. For example, the threshold value is determined based on the maximum certainty factor of a certainty factor vector obtained by using a feature amount vector group prepared for threshold value calculation. For example, the certainty factor correction unit 140 sets an average Tₛ of the maximum certainty factors as the threshold value. The certainty factor correction unit 140 may calculate the threshold value by using a value of a standard deviation v of the maximum certainty factor. For example, the certainty factor correction unit 140 sets a value (Tₛ + 2v or the like) obtained by adding an integer multiple of the standard deviation v to the average Tₛ as the threshold value. The certainty factor correction unit 140 may set an upper X percentile value of the maximum certainty factor as the threshold value.

According to the graph 61, a certainty factor of the class "A", which is the maximum certainty factor, is equal to or less than the threshold value. In this case, the certainty factor is corrected by the certainty factor correction unit 140.

In a case of correcting the certainty factor, the certainty factor correction unit 140 first generates a descending certainty factor vector = [p₀, p₁, ..., and pₙ]. The descending certainty factor vector is a vector obtained by rearranging elements of a certainty factor vector output from a model of an n + 1 (n is an integer equal to or more than 1) class classification task in a descending order according to the certainty factors. pᵢ (i = 0, ..., and n) is a certainty factor of a class having the (i + 1)-th highest certainty factor. In the example illustrated in FIG. 8, the certainty factor of the class "A" is p₀, a certainty factor of the class "B" is p₁, a certainty factor of the class "C" is p₂, and a certainty factor of the class "D" is p₃.

The certainty factor correction unit 140 adds x (x is a positive real number less than 1) to the certainty factor of the class "A" so that the certainty factor of the class "A" exceeds the threshold value. An addition result is illustrated in the graph 62.

For example, the certainty factor correction unit 140 updates the p₀ that is the maximum certainty factor to T + b (b is a random number equal to or more than 0 and equal to or less than 1 - T) (p₀ = T + b). In this case, "x = T + b - p₀" is satisfied.

In a state of the graph 62, a sum of the certainty factors of the respective classes exceeds 1, and a contradiction occurs as a probability value. Accordingly, the certainty factor correction unit 140 decreases the certainty factors by ac in an ascending order from the minimum certainty factor until the decrease amount sum x is reached (a is a positive real number equal to or less than 1, and c = pₙ).

After updating the pₙ in the ascending order, the certainty factor correction unit 140 ends the subtraction process when a total decrease amount reaches x in the middle of the update. For example, when x > Σ₀^{k}ac in i = n - k, and k = 1, the certainty factor correction unit 140 updates pₙ₋₁ to pₙ₋₁ - (x - Σ₀^{k-1}ac) and ends the process.

At the time of updating p₁, when the total decrease amount is less than x, the certainty factor correction unit 140 updates c = pₘᵢₙ, and repeats in the ascending order from pₘᵢₙ (pₘᵢₙ is the minimum certainty factor other than 0).

In the example illustrated in FIG. 8, "a = 1". In this case, the certainty factor of the class "D" having the smallest value in the state of the graph 62 is the subtraction value (ac). The certainty factor correction unit 140 subtracts the determined subtraction value in the ascending order of the certainty factors. In the graph 63, a height of the hatched region in the classes "B", "C", and "D" indicates the subtraction value. A number on the upper right side of each hatched region indicates an order of subtraction. The height of the hatched region in the class "A" indicates a sum of the subtraction values.

In a state of the graph 63, the sum of the subtraction values does not reach the addition value x. Accordingly, the certainty factor correction unit 140 performs the subtraction process on the certainty factor of each class again. At this time, in the example illustrated in FIG. 8, the certainty factor of the class "C" having the smallest value other than "0" is determined as the subtraction value. The certainty factor correction unit 140 subtracts the determined subtraction value in the ascending order of the certainty factors. According to the example illustrated in FIG. 8, when the subtraction value is subtracted from the certainty factor of the class "C", a difference between the sum of the subtraction values up to that time and the addition value x is less than the subtraction value. Accordingly, the certainty factor correction unit 140 subtracts, from the certainty factor of the class "B", only the difference between the sum of the subtraction values and the addition value x obtained so far.

A certainty factor correction result is illustrated in the graph 65. As described above, when the maximum certainty factor of the certainty factor vector calculated by the class classification unit 130 is equal to or less than the threshold value, as illustrated in the graph 65, the maximum certainty factor is corrected so as to exceed the threshold value. The subtraction process is performed on the certainty factors other than the maximum certainty factor such that the order of sizes of the values is not changed. Accordingly, the sum of all the certainty factors may be set to "1" even after the correction, and occurrence of a contradiction as a probability value is suppressed.

Although, in the example illustrated in FIG. 8, x is added to the maximum certainty factor, and then subtracted from the other certainty factors, the addition may be performed after the subtraction. Every time the value is subtracted from each certainty factor, a process of adding the subtraction value to the maximum certainty factor may be performed.

Next, a generation procedure of a certainty factor vector with improved resistance to a membership inference attack will be described in detail.

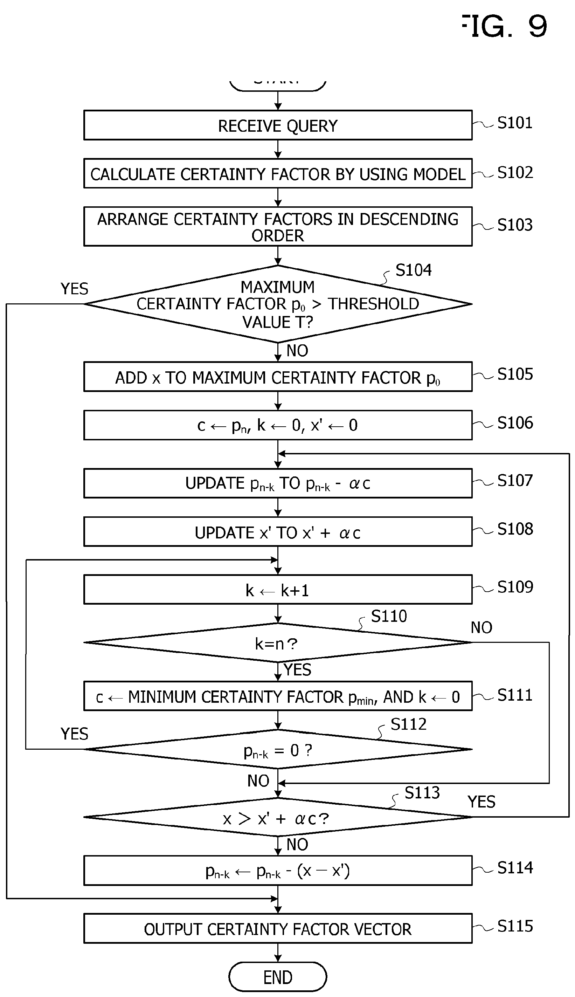

FIG. 9 is a flowchart illustrating an example of a procedure of a certainty factor vector generation process of improving resistance to a membership inference attack. Hereinafter, the processes illustrated in FIG. 9 will be described along step numbers.

[Step S101] The query acceptance unit 120 receives a query transmitted to the server 100 by any terminal.

[Step S102] The class classification unit 130 uses the trained model 111 to calculate a certainty factor for each class corresponding to a feature amount vector indicated in the query. The class classification unit 130 transmits a certainty factor vector indicating the certainty factor for each class to the certainty factor correction unit 140.

[Step S103] The certainty factor correction unit 140 arranges the certainty factors of the respective classes in a descending order. For example, the certainty factor correction unit 140 generates a descending certainty factor vector having the certainty factors arranged in the descending order as elements.

[Step S104] The certainty factor correction unit 140 determines whether or not the maximum certainty factor p₀ is more than a threshold value T. In a case where the maximum certainty factor p₀ is more than the threshold value T, the certainty factor correction unit 140 shifts the process to step S115. In a case where the maximum certainty factor p₀ is equal to or less than the threshold value T, the certainty factor correction unit 140 shifts the process to step S105.

[Step S105] The certainty factor correction unit 140 adds x to the maximum certainty factor p₀. For example, the certainty factor correction unit 140 generates a random number b, and calculates "x = T + b - p₀". The certainty factor correction unit 140 updates the maximum certainty factor p₀ to "p₀ + x" (= T + b). Accordingly, the maximum certainty factor p₀ is a random value equal to or more than the threshold value T.

[Step S106] The certainty factor correction unit 140 initializes a variable for certainty factor subtraction. For example, the certainty factor correction unit 140 sets the minimum certainty factor pₙ to c indicating a reference value of a decrease amount per one time. The certainty factor correction unit 140 sets "0" to k indicating the number of iterations. The certainty factor correction unit 140 sets "0" to x' indicating a subtraction sum.

[Step S107] The certainty factor correction unit 140 updates a value of the certainty factor pₙ₋ₖ of a subtraction target to "pₙ₋ₖ - ac". For example, the certainty factor correction unit 140 subtracts the decrease amount "ac" from the certainty factor of the subtraction target.

[Step S108] The certainty factor correction unit 140 updates the sum x' of the subtraction values to "x' + ac". For example, the certainty factor correction unit 140 adds the value obtained by the subtraction in step S107 to the sum of the subtraction values.

[Step S109] The certainty factor correction unit 140 updates k to "k + 1". Accordingly, the certainty factor of the subtraction target is changed to the immediately preceding element in the descending certainty factor vector.

[Step S110] The certainty factor correction unit 140 determines whether or not k = n. A case where k = n is a case where the certainty factor of the subtraction target is the maximum certainty factor. When k = n, the certainty factor correction unit 140 shifts the process to step S111. When k = n is not satisfied, the certainty factor correction unit 140 shifts the process to step S113.

[Step S111] The certainty factor correction unit 140 updates c to the minimum certainty factor pₘᵢₙ other than "0" among the current certainty factors. The certainty factor correction unit 140 initializes k to "0". By initializing k, the certainty factor of the subtraction target is changed to the lowest element of the descending certainty factor vector.

[Step S112] The certainty factor correction unit 140 determines whether or not the value of the certainty factor p ₙ₋ₖ of the subtraction target ((n-k)-th element of the descending certainty factor vector) is "0". A case where the value of the certainty factor of the subtraction target is "0" is, for example, a case where the value is updated to "0" in the previous subtraction process as in the certainty factor of the class "D" in the graph 64 in FIG. 8. When the value of the certainty factor of the subtraction target is "0", the certainty factor correction unit 140 shifts the process to step S109. When the value of the certainty factor of the subtraction target is not "0", the certainty factor correction unit 140 shifts the process to step S113.

[Step S113] The certainty factor correction unit 140 determines whether or not a value "x' + ac" obtained by further adding one decrease amount to the sum x' of the subtraction values is less than x. When "x' + ac" is less than x, the certainty factor correction unit 140 shifts the process to step S107. When "x' + ac" is equal to or more than x, the certainty factor correction unit 140 shifts the process to step S114.

[Step S114] The certainty factor correction unit 140 updates the certainty factor pₙ₋ₖ of the subtraction target to "pₙ₋ₖ - (x - x')". For example, the certainty factor correction unit 140 subtracts a difference between the increase amount x and the sum x' of the decrease amounts, from the certainty factor of the subtraction target.

[Step S115] The certainty factor correction unit 140 returns an order of the elements of the descending certainty factor vector in which the value of the certainty factor is corrected, to an order of the elements for each class in the original certainty factor vector so as to generate a corrected certainty factor vector. After that, the certainty factor correction unit 140 outputs the generated certainty factor vector.

As described above, the certainty factor is corrected without changing the order of the certainty factor of each class. Accordingly, security against the membership inference attack may be enhanced. For example, even when the attacker transmits a query having a randomly generated feature amount vector to the server 100, the maximum certainty factor of the certainty factor vector returned in response to each query is equal to or more than a threshold value. For this reason, the attacker may not appropriately set a threshold value of the maximum certainty factor for distinguishing data which is included in training data from data which is not included in the training data, and may not accurately determine whether or not specific data belongs to the training data.

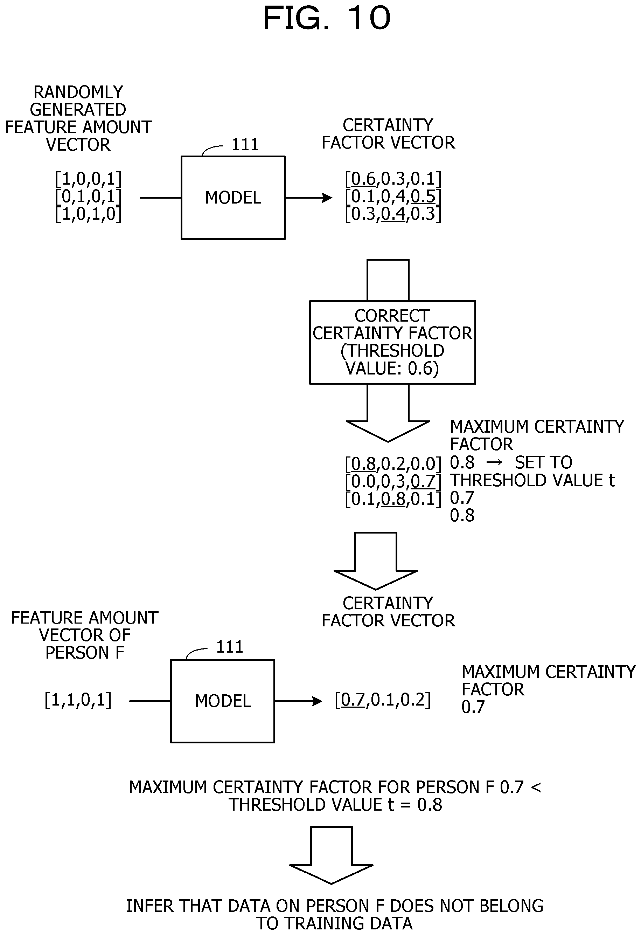

FIG. 10 is a diagram illustrating a failure example of a membership inference attack. For example, when an attacker transmits a query including a randomly generated feature amount vector to the server 100, the server 100 performs a class classification process by using the model 111 to calculate a certainty factor vector for each query. Among the certainty factor vectors, the server 100 corrects a certainty factor of a certainty factor vector having the maximum certainty factor equal to or less than a threshold value. In the example illustrated in FIG. 10, it is assumed that the threshold value is "0.6".

In the three certainty factor vectors illustrated in FIG. 10, any maximum certainty factor is equal to or less than the threshold value. After correcting the certainty factor, the server 100 transmits the corrected certainty factor vector to a terminal of the attacker as a response to the query. Accordingly, all the maximum certainty factors of the certainty factor vectors acquired by the attacker are more than the threshold value. When the attacker calculates a threshold value for the membership inference attack, based on the acquired certainty factor vector, the threshold value is "0.8", for example.

After that, the attacker uses the terminal to generate a feature amount vector of data on the person F belonging to training data, and transmits a query including the feature amount vector to the server 100. By using the model 111, the server 100 calculates a certainty factor vector corresponding to the feature amount vector of the person F. According to the example illustrated in FIG. 10, the maximum certainty factor of the certainty factor vector generated in accordance with the feature amount vector of the person F is "0.7". Since this maximum certainty factor is more than the threshold value of "0.6" for certainty factor correction, the certainty factor is not corrected. Accordingly, the uncorrected certainty factor vector corresponding to the feature amount vector of the person F is transmitted from the server 100 to the terminal of the attacker.

The attacker determines that the maximum certainty factor of the acquired certainty factor vector is "0.7" and the maximum certainty factor is less than the threshold value t = 0.8 specified by using random feature amount data. As a result, the attacker infers that the data on the person F does not belong to the training data.

As seen by comparing the example in FIG. 5 with the example in FIG. 10, by performing correction on the certainty factor, it is suppressed that the attacker knows whether or not the data on the person F is included in the training data. For example, resistance to the membership inference attack is improved.

### [Other Embodiments]

Although the server 100 corrects the certainty factor such that the maximum certainty factor exceeds the threshold value for all the certainty factor vectors in the second embodiment, the server 100 may correct the certainty factor such that the maximum certainty factor is less than the threshold value for all the certainty factor vectors.

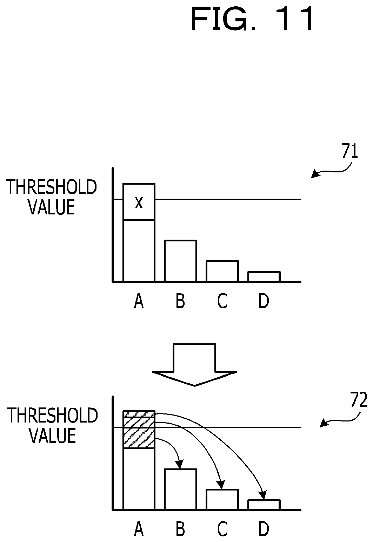

FIG. 11 is a diagram illustrating an example of certainty factor correction in which correction of decreasing the maximum certainty factor is performed. For example, the certainty factor correction unit 140 of the server 100 sets an upper limit threshold value of the maximum certainty factor. For example, the certainty factor correction unit 140 uses training data to set an upper t percentile of the maximum certainty factor of each of a plurality of certainty factor vectors obtained by the training data as an upper limit threshold value tt.

In a case where the maximum certainty factor of the certainty factor vector generated by class classification exceeds the upper limit threshold value tₜ, the certainty factor correction unit 140 performs a certainty factor correction process of decreasing the maximum certainty factor by x. For example, in a case where the certainty factor is corrected, the certainty factor correction unit 140 first rearranges the elements of the certainty factor vector in a descending order by the certainty factors to generate a descending certainty factor vector = [p₀, p₁, ..., pₙ].

Next, the certainty factor correction unit 140 decreases the maximum certainty factor p₀ by x. For example, the certainty factor correction unit 140 decreases the maximum certainty factor p₀ to p₀ = tₛ. tₛ is a value equal to or less than the upper limit threshold value tₜ. The decrease amount x at this time is "x = p₀ - tₛ".

For example, the certainty factor correction unit 140 sets p₀ (= tₛ) after correction to p₀ = p₁ + a by using a random number a. The certainty factor correction unit 140 may set p₀ (= tₛ) after correction to p₀ = tₜ - a.

The certainty factor correction unit 140 distributes the decreased amount (decrease amount x) to other certainty factors. For example, each pᵢ is updated to "pᵢ + x × (pᵢ / (Σ_{i = 1}ⁿpᵢ))". Σ_{i = 1}ⁿpᵢ is a sum of the certainty factors other than the maximum certainty factor. For example, a value obtained by proportionally distributing the decrease amount x to each certainty factor other than the maximum certainty factor in accordance with a size of the certainty factor is "x × (pᵢ / (Σ_{i = 1}ⁿpᵢ))". The certainty factor correction unit 140 adds the value obtained by the proportional distribution to each certainty factor.

Accordingly, when the maximum certainty factor exceeds the threshold value as illustrated in the graph 71, the maximum certainty factor is corrected to be equal to or less than the threshold value as illustrated in the graph 72. By performing the certainty factor correction process in this manner, even when an attacker transmits feature amount data generated from data on a specific person included in training data as a query to the server 100, the maximum certainty factor of a certainty factor vector returned from the server 100 is equal to or less than a threshold value. As a result, the attacker may not correctly determine whether or not the data on the person that is a generation source of the transmitted query is included in the training data.

Hereinbefore, the embodiments are exemplified, the configuration of each unit described in the embodiment may be replaced with another unit having the same function. Arbitrary other component or step may be added. Arbitrary two or more configurations (features) of the embodiments described above may be combined.

## Claims

1. An information processing program that causes at least one computer to execute a process, the process comprising:
acquiring each of a plurality of certainty factors representing a possibility that classification target data belongs to a class of a plurality of classes for each of the plurality of classes by using a trained model;
determining whether a maximum certainty factor having a maximum value among the plurality of certainty factors of the plurality of classes is within a certain value range;
correcting a value of the maximum certainty factor to a value within the certain value range when the maximum certainty factor is not within the certain value range by
increasing a value of an increase target certainty factor other than the maximum certainty factor until a sum of increase amounts is equal to a decrease amount of the maximum certainty factor while maintaining an order of the plurality of classes by the plurality of certainty factors, or
decreasing the certainty factors in an ascending order from the minimum certainty factor until the decrease amount sum reaches the increase amount of the maximum certainty factor; and
outputting the plurality of certainty factors after the correcting as a result of class classification for the classification target data or
in a case where the maximum certainty factor of the certainty factors is within the certain value range, outputting the calculation result without correction as the result of class classification.

2. The information processing program according to claim 1, wherein
the certain value range is a range of a value greater than a threshold value, and
the correcting includes increasing the value of the maximum certainty factor that is equal to or less than the threshold value to the value greater than the threshold value.

3. The information processing program according to claim 2, wherein the process further comprising
when the maximum certainty factor is not within the certain value range, decreasing a value of a decrease target certainty factor other than the maximum certainty factor so that a sum of decrease amounts is equal to an increase amount of the maximum certainty factor while maintaining an order that the plurality of certainty factors are arranged with sizes of values.

4. The information processing program according to claim 3, wherein
the decreasing includes decreasing the decrease target certainty factor in an ascending order from a minimum certainty factor having a smallest value, until the sum of decrease amounts is equal to the increase amount of the maximum certainty factor.

5. The information processing program according to claim 1, wherein
the certain value range is a range of a value equal to or less than a threshold value, and
the correcting includes decreasing the maximum certainty factor exceeding the threshold value to the value equal to or less than the threshold value.

6. The information processing program according to any one of claims 1 to 5, wherein the correcting includes:
determining the value within the certain value range by using a random number; and
correcting the maximum certainty factor to the determined value.

7. An information processing method for a computer to execute a process comprising:
acquiring each of a plurality of certainty factors representing a possibility that classification target data belongs to a class of a plurality of classes for each of the plurality of classes by using a trained model;
determining whether a maximum certainty factor having a maximum value among the plurality of certainty factors of the plurality of classes is within a certain value range;
correcting a value of the maximum certainty factor to a value within the certain value range when the maximum certainty factor is not within the certain value range by
increasing a value of an increase target certainty factor other than the maximum certainty factor until a sum of increase amounts is equal to a decrease amount of the maximum certainty factor while maintaining an order of the plurality of classes by the plurality of certainty factors, or
decreasing the certainty factors in an ascending order from the minimum certainty factor until the decrease amount sum reaches the increase amount of the maximum certainty factor; and
outputting the plurality of certainty factors after the correcting as a result of class classification for the classification target data or
in a case where the maximum certainty factor of the certainty factors is within the certain value range, outputting the calculation result without correction as the result of class classification.

8. An information processing apparatus (10) comprising:
a control unit configured to:
acquire each of a plurality of certainty factors representing a possibility that classification target data belongs to a class of a plurality of classes for each of the plurality of classes by using a trained model,
determine whether a maximum certainty factor having a maximum value among the plurality of certainty factors of the plurality of classes is within a certain value range,
correct a value of the maximum certainty factor to a value within the certain value range when the maximum certainty factor is not within the certain value range by
increasing a value of an increase target certainty factor other than the maximum certainty factor until a sum of increase amounts is equal to a decrease amount of the maximum certainty factor whilemaintain an order of the plurality of classes by the plurality of certainty factors, or
decreasing the certainty factors in an ascending order from the minimum certainty factor until the decrease amount sum reaches the increase amount of the maximum certainty factor, and
output the plurality of certainty factors after the correcting as a result of class classification for the classification target data or
in a case where the maximum certainty factor of the certainty factors is within the certain value range, output the calculation result without correction as the result of class classification.

## Patentansprüche

1. Informationsverarbeitungsprogramm, das mindestens einen Computer veranlasst, ein Verfahren auszuführen, wobei das Verfahren Folgendes umfasst:
Erfassen jedes von einer Vielzahl von Wahrscheinlichkeitsfaktoren, die eine Möglichkeit darstellen, dass Klassifizierungszieldaten zu einer Klasse einer Vielzahl von Klassen für jede der Vielzahl von Klassen gehören, unter Verwendung eines trainierten Modells;
Bestimmen, ob ein maximaler Wahrscheinlichkeitsfaktor, der einen maximalen Wert unter der Vielzahl von Wahrscheinlichkeitsfaktoren der Vielzahl von Klassen aufweist, innerhalb eines bestimmten Wertebereichs liegt;
Korrigieren eines Wertes des maximalen Wahrscheinlichkeitsfaktors auf einen Wert innerhalb des bestimmten Wertebereichs, wenn der maximale Wahrscheinlichkeitsfaktor nicht innerhalb des bestimmten Wertebereichs liegt, durch
Erhöhen eines Wertes eines Erhöhungsziel-Wahrscheinlichkeitsfaktors außer dem maximalen Wahrscheinlichkeitsfaktor, bis eine Summe von Erhöhungsbeträgen einem Verringerungsbetrag des maximalen Wahrscheinlichkeitsfaktors gleich ist, unter Beibehaltung einer Reihenfolge der Vielzahl von Klassen nach der Vielzahl von Wahrscheinlichkeitsfaktoren, oder
Verringern der Wahrscheinlichkeitsfaktoren in einer aufsteigenden Reihenfolge von dem minimalen Wahrscheinlichkeitsfaktor an, bis die Verringerungsbetrags-Summe den Erhöhungsbetrag des maximalen Wahrscheinlichkeitsfaktors erreicht; und
Ausgeben der Vielzahl von Wahrscheinlichkeitsfaktoren nach dem Korrigieren als Ergebnis der Klassenklassifizierung für die Klassifizierungszieldaten oder
in einem Fall, in dem der maximale Wahrscheinlichkeitsfaktor der Wahrscheinlichkeitsfaktoren innerhalb des bestimmten Wertebereichs liegt, Ausgeben des Berechnungsergebnisses ohne Korrektur als das Ergebnis der Klassenklassifizierung.

2. Informationsverarbeitungsprogramm nach Anspruch 1, wobei
der bestimmte Wertebereich ein Bereich eines Wertes ist, der größer als ein Schwellenwert ist, und
das Korrigieren das Erhöhen des Wertes des maximalen Wahrscheinlichkeitsfaktors, der gleich dem Schwellenwert oder kleiner als der Schwellenwert ist, auf den Wert größer als der Schwellenwert einschließt.

3. Informationsverarbeitungsprogramm nach Anspruch 2, wobei das Verfahren weiter umfasst
wenn der maximale Wahrscheinlichkeitsfaktor nicht innerhalb des bestimmten Wertebereichs liegt, Verringern eines Wertes eines Verringerungsziel-Wahrscheinlichkeitsfaktors außer dem maximalen Wahrscheinlichkeitsfaktor, sodass eine Summe von Verringerungsbeträgen einem Erhöhungsbetrag des maximalen Wahrscheinlichkeitsfaktors gleich ist, unter Beibehaltung einer Reihenfolge, in der die Vielzahl von Wahrscheinlichkeitsfaktoren nach Größen von Werten angeordnet ist.

4. Informationsverarbeitungsprogramm nach Anspruch 3, wobei
das Verringern das Verringern des Verringerungsziel-Wahrscheinlichkeitsfaktors in einer aufsteigenden Reihenfolge von einem minimalen Wahrscheinlichkeitsfaktor, der einen kleinsten Wert aufweist, einschließt, bis die Summe von Verringerungsbeträgen dem Erhöhungsbetrag des maximalen Wahrscheinlichkeitsfaktors gleich ist.

5. Informationsverarbeitungsprogramm nach Anspruch 1, wobei
der bestimmte Wertebereich ein Bereich eines Wertes ist, der gleich dem Schwellenwert oder kleiner als der Schwellenwert ist, und
das Korrigieren das Verringern des maximalen Wahrscheinlichkeitsfaktors, der den Schwellenwert überschreitet, auf den Wert, der gleich dem Schwellenwert oder kleiner als der Schwellenwert ist, einschließt.

6. Informationsverarbeitungsprogramm nach einem der Ansprüche 1 bis 5, wobei das Korrigieren Folgendes einschließt:
Bestimmen des Wertes innerhalb des bestimmten Wertebereichs unter Verwendung einer Zufallszahl; und
Korrigieren des maximalen Wahrscheinlichkeitsfaktors auf den bestimmten Wert.

7. Informationsverarbeitungsverfahren für einen Computer zur Ausführung eines Verfahrens, umfassend:
Erfassen jedes von einer Vielzahl von Wahrscheinlichkeitsfaktoren, die eine Möglichkeit darstellen, dass Klassifizierungszieldaten zu einer Klasse einer Vielzahl von Klassen für jede der Vielzahl von Klassen gehören, unter Verwendung eines trainierten Modells;
Bestimmen, ob ein maximaler Wahrscheinlichkeitsfaktor, der einen maximalen Wert unter der Vielzahl von Wahrscheinlichkeitsfaktoren der Vielzahl von Klassen aufweist, innerhalb eines bestimmten Wertebereichs liegt;
Korrigieren eines Wertes des maximalen Wahrscheinlichkeitsfaktors auf einen Wert innerhalb des bestimmten Wertebereichs, wenn der maximale Wahrscheinlichkeitsfaktor nicht innerhalb des bestimmten Wertebereichs liegt, durch
Erhöhen eines Wertes eines Erhöhungsziel-Wahrscheinlichkeitsfaktors außer dem maximalen Wahrscheinlichkeitsfaktor, bis eine Summe von Erhöhungsbeträgen einem Verringerungsbetrag des maximalen Wahrscheinlichkeitsfaktors gleich ist, unter Beibehaltung einer Reihenfolge der Vielzahl von Klassen nach der Vielzahl von Wahrscheinlichkeitsfaktoren, oder
Verringern der Wahrscheinlichkeitsfaktoren in einer aufsteigenden Reihenfolge von dem minimalen Wahrscheinlichkeitsfaktor an, bis die Verringerungsbetrags-Summe den Erhöhungsbetrag des maximalen Wahrscheinlichkeitsfaktors erreicht; und
Ausgeben der Vielzahl von Wahrscheinlichkeitsfaktoren nach dem Korrigieren als Ergebnis der Klassenklassifizierung für die Klassifizierungszieldaten oder
in einem Fall, in dem der maximale Wahrscheinlichkeitsfaktor der Wahrscheinlichkeitsfaktoren innerhalb des bestimmten Wertebereichs liegt, Ausgeben des Berechnungsergebnisses ohne Korrektur als das Ergebnis der Klassenklassifizierung.

8. Informationsverarbeitungseinrichtung (10), umfassend:
eine Steuereinheit, die ausgebildet ist, um:
jedes von einer Vielzahl von Wahrscheinlichkeitsfaktoren zu erfassen, die eine Möglichkeit darstellen, dass Klassifizierungszieldaten zu einer Klasse einer Vielzahl von Klassen für jede der Vielzahl von Klassen gehören, unter Verwendung eines trainierten Modells,
zu bestimmen, ob ein maximaler Wahrscheinlichkeitsfaktor, der einen maximalen Wert unter der Vielzahl von Wahrscheinlichkeitsfaktoren der Vielzahl von Klassen aufweist, innerhalb eines bestimmten Wertebereichs liegt,
einen Wert des maximalen Wahrscheinlichkeitsfaktors auf einen Wert innerhalb des bestimmten Wertebereichs zu korrigieren, wenn der maximale Wahrscheinlichkeitsfaktor nicht innerhalb des bestimmten Wertebereichs liegt, durch
Erhöhen eines Wertes eines Erhöhungsziel-Wahrscheinlichkeitsfaktors außer dem maximalen Wahrscheinlichkeitsfaktor, bis eine Summe von Erhöhungsbeträgen einem Verringerungsbetrag des maximalen Wahrscheinlichkeitsfaktors gleich ist, unter Beibehaltung einer Reihenfolge der Vielzahl von Klassen nach der Vielzahl von Wahrscheinlichkeitsfaktoren, oder
Verringern der Wahrscheinlichkeitsfaktoren in einer aufsteigenden Reihenfolge von dem minimalen Wahrscheinlichkeitsfaktor an, bis die Verringerungsbetrags-Summe den Erhöhungsbetrag des maximalen Wahrscheinlichkeitsfaktors erreicht, und
die Vielzahl von Wahrscheinlichkeitsfaktoren nach dem Korrigieren als Ergebnis der Klassenklassifizierung für die Klassifizierungszieldaten auszugeben oder
in einem Fall, in dem der maximale Wahrscheinlichkeitsfaktor der Wahrscheinlichkeitsfaktoren innerhalb des bestimmten Wertebereichs liegt, das Berechnungsergebnis ohne Korrektur als das Ergebnis der Klassenklassifizierung auszugeben.

## Revendications

1. Programme de traitement d'informations qui amène au moins un ordinateur à mettre en œuvre un processus, le processus comprenant :
l'acquisition de chacun d'une pluralité de facteurs de certitude représentant une possibilité que des données cibles de classification appartiennent à une classe d'une pluralité de classes pour chacune de la pluralité de classes en utilisant un modèle entraîné ;
le fait de déterminer si un facteur de certitude maximal présentant une valeur maximale parmi la pluralité de facteurs de certitude de la pluralité de classes est dans une certaine plage de valeurs ;
la correction d'une valeur du facteur de certitude maximal à une valeur dans la certaine plage de valeurs lorsque le facteur de certitude maximal n'est pas dans la certaine plage de valeurs en
augmentant une valeur d'un facteur de certitude cible d'augmentation autre que le facteur de certitude maximal jusqu'à ce qu'une somme de quantités d'augmentation soit égale à une quantité de diminution du facteur de certitude maximal tout en maintenant un ordre de la pluralité de classes par la pluralité de facteurs de certitude, ou
diminuant les facteurs de certitude dans un ordre croissant à partir du facteur de certitude minimal jusqu'à ce que la somme des quantités de diminution atteigne la quantité d'augmentation du facteur de certitude maximal ; et
la délivrance en sortie de la pluralité de facteurs de certitude après la correction en tant que résultat de classification en classes pour les données cibles de classification ou
dans un cas où le facteur de certitude maximal des facteurs de certitude est dans la certaine plage de valeurs, la délivrance en sortie du résultat de calcul sans correction en tant que résultat de classification en classes.

2. Programme de traitement d'informations selon la revendication 1, dans lequel
la certaine plage de valeurs est une plage d'une valeur supérieure à une valeur seuil, et
la correction inclut l'augmentation de la valeur du facteur de certitude maximal, qui est inférieure ou égale à la valeur seuil, à la valeur supérieure à la valeur seuil.

3. Programme de traitement d'informations selon la revendication 2, dans lequel le processus comprend en outre
lorsque le facteur de certitude maximal n'est pas dans la certaine plage de valeurs, la diminution d'une valeur d'un facteur de certitude cible de diminution autre que le facteur de certitude maximal de telle sorte qu'une somme de quantités de diminution soit égale à une quantité d'augmentation du facteur de certitude maximal tout en maintenant un ordre selon lequel la pluralité de facteurs de certitude sont agencés en fonction de tailles de valeurs.

4. Programme de traitement d'informations selon la revendication 3, dans lequel
la diminution inclut la diminution du facteur de certitude cible de diminution dans un ordre croissant à partir d'un facteur de certitude minimal présentant une valeur la plus petite, jusqu'à ce que la somme des quantités de diminution soit égale à la quantité d'augmentation du facteur de certitude maximal.

5. Programme de traitement d'informations selon la revendication 1, dans lequel
la certaine plage de valeurs est une plage d'une valeur inférieure ou égale à une valeur seuil, et
la correction inclut la diminution du facteur de certitude maximal dépassant la valeur seuil à la valeur inférieure ou égale à la valeur seuil.

6. Programme de traitement d'informations selon l'une quelconque des revendications 1 à 5, dans lequel la correction inclut :
la détermination de la valeur dans la certaine plage de valeurs en utilisant un nombre aléatoire ; et
la correction du facteur de certitude maximal à la valeur déterminée.

7. Procédé de traitement d'informations pour qu'un ordinateur mette en œuvre un processus comprenant :
l'acquisition de chacun d'une pluralité de facteurs de certitude représentant une possibilité que des données cibles de classification appartiennent à une classe d'une pluralité de classes pour chacune de la pluralité de classes en utilisant un modèle entraîné ;
le fait de déterminer si un facteur de certitude maximal présentant une valeur maximale parmi la pluralité de facteurs de certitude de la pluralité de classes est dans une certaine plage de valeurs ;
la correction d'une valeur du facteur de certitude maximal à une valeur dans la certaine plage de valeurs lorsque le facteur de certitude maximal n'est pas dans la certaine plage de valeurs en
augmentant une valeur d'un facteur de certitude cible d'augmentation autre que le facteur de certitude maximal jusqu'à ce qu'une somme de quantités d'augmentation soit égale à une quantité de diminution du facteur de certitude maximal tout en maintenant un ordre de la pluralité de classes par la pluralité de facteurs de certitude, ou
diminuant les facteurs de certitude dans un ordre croissant à partir du facteur de certitude minimal jusqu'à ce que la somme des quantités de diminution atteigne la quantité d'augmentation du facteur de certitude maximal ; et
la délivrance en sortie de la pluralité de facteurs de certitude après la correction en tant que résultat de classification en classes pour les données cibles de classification ou
dans un cas où le facteur de certitude maximal des facteurs de certitude est dans la certaine plage de valeurs, la délivrance en sortie du résultat de calcul sans correction en tant que résultat de classification en classes.

8. Appareil (10) de traitement d'informations comprenant :
une unité de commande configurée pour :
acquérir chacun d'une pluralité de facteurs de certitude représentant une possibilité que des données cibles de classification appartiennent à une classe d'une pluralité de classes pour chacune de la pluralité de classes en utilisant un modèle entraîné,
déterminer si un facteur de certitude maximal présentant une valeur maximale parmi la pluralité de facteurs de certitude de la pluralité de classes est dans une certaine plage de valeurs ;
corriger une valeur du facteur de certitude maximal à une valeur dans la certaine plage de valeurs lorsque le facteur de certitude maximal n'est pas dans la certaine plage de valeurs en
augmentant une valeur d'un facteur de certitude cible d'augmentation autre que le facteur de certitude maximal jusqu'à ce qu'une somme de quantités d'augmentation soit égale à une quantité de diminution du facteur de certitude maximal tout en maintenant un ordre de la pluralité de classes par la pluralité de facteurs de certitude, ou
diminuant les facteurs de certitude dans un ordre croissant à partir du facteur de certitude minimal jusqu'à ce que la somme des quantités de diminution atteigne la quantité d'augmentation du facteur de certitude maximal, et
délivrer en sortie la pluralité de facteurs de certitude après la correction en tant que résultat de classification en classes pour les données cibles de classification ou
dans un cas où le facteur de certitude maximal des facteurs de certitude est dans la certaine plage de valeurs, délivrer en sortie le résultat de calcul sans correction en tant que résultat de classification en classes.
